**Europäisches Patentamt**

**European Patent Office**

**Office européen des brevets**

(11) Publication number: **0 180 775**
**B1**

(12) **EUROPEAN PATENT SPECIFICATION**

(45) Date of publication of patent specification: **10.01.90**

(51) Int. Cl.⁵: **G 21 C 3/32**

(21) Application number: **85112583.1**

(22) Date of filing: **04.10.85**

(54) Symmetric blanket nuclear fuel assembly.

(30) Priority: **22.10.84 US 663522**

(43) Date of publication of application:
**14.05.86 Bulletin 86/20**

(45) Publication of the grant of the patent:
**10.01.90 Bulletin 90/02**

(84) Designated Contracting States:
**BE DE FR GB IT SE**

(56) References cited:
**FR-A-2 552 921**
**US-A-3 910 818**
**US-A-4 251 321**

(73) Proprietor: **WESTINGHOUSE ELECTRIC CORPORATION**
**Westinghouse Building Gateway Center**
**Pittsburgh Pennsylvania 15222 (US)**

(72) Inventor: **Penkrot, John Anthony**
**4817 E. Willock Road**
**Pittsburgh Pennsylvania 15227 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

Courier Press, Leamington Spa, England.

## Description

The present invention relates generally to nuclear reactors and, more particularly, to fuel assemblies therefor.

In most nuclear reactors, the reactor core is composed of a large number of elongated fuel assemblies, each comprising a plurality of fuel rods and control rod guide thimbles held in an organized array by means of grids spaced apart along the fuel assembly and attached to the guide thimbles. Top and bottom nozzles on opposite ends of the assembly are secured to the guide thimbles, which extend above and below the ends of the fuel rods, so as to form the fuel assembly as an integral unit.

Each of the fuel rods in a fuel assembly includes nuclear fuel pellets which are the source of the reactive power of the reactor core. All of the fuel assemblies of a reactor core are substantially identical except for different percent enrichment of fuel material in the fuel rods of one group of assemblies as compared to another group. Traditionally, the fuel rods in some of the fuel assemblies of the core contain enriched uranium, generally known as fissile material, which is capable of sustaining a chain reaction, whereas the fuel rods in others of the fuel assemblies contain natural uranium, generally known as fertile material, which is incapable of sustaining a chain reaction but which later converts to fissile material upon exposure to neutron bombardment.

Basically, fuel assemblies containing enriched uranium are known as seed assemblies, while those containing natural uranium are known as blanket assemblies. Various reactor core loading arrangements of seed and blanket assemblies are known in the art. Several of such arrangements are disclosed in U.S. Patent Specification No. 3,158,543, No. 3,211,621, No. 4,096,033, No. 4,326,919, and No. 4,378,329.

Many arrangements in use at the present time incorporate what is known as a radial blanket concept which provides for fuel assemblies containing natural uranium, i.e. for blanket assemblies, to be positioned directly on the core periphery, next to the core baffle, in order to improve fertile material conversion and decrease neutron leakage. However, such positional relationship of the blanket assemblies relative to the center and periphery of the core has two major drawbacks both of which are related to the asymmetric loading of natural uranium entailed in such arrangement. First, the enriched uranium of the seed assemblies, located next to the natural uranium of the blanket assemblies, is underutilized and thus achieves lower than average burnup rates. Second, serious peaking problems can occur when these assemblies are shuffled to other locations in the core in which natural uranium is not along a core boundary.

US-A-4 251 321 discloses a nuclear fuel assembly in which the fuel rods are arranged in a plurality of substantially concentrically located groups wherein the rods of each group may contain differing amounts and kinds of fissile material. More specifically, the fuel rods of each group contain a different amount (including zero) of plutonium whereby the plutonium fuel enrichment is radially varied or graduated across the fuel assembly. This prior art, however, intends to utilize plutonium fuel for refueling a nuclear reactor but does not relate to a blanket concept.

It is the principal object of the invention to improve the arrangement of natural and enriched uranium materials within a reactor core in a manner which increases the efficiency of the nuclear fuel while keeping potential leakage and peaking problems under control.

Accordingly, the invention resides in a blanket fuel assembly as defined and characterized in claim 1.

Accordingly, the fertile material, such as natural uranium, is placed at the center of the assembly, whereas the fissile material such as enriched uranium, is located on all sides thereof. This design maintains control of leakage and peaking while providing other identifiable advantages not present in prior designs. First, unlike conventional assembly designs with only natural uranium on the core baffle, the symmetric blanket assembly may be shuffled from one core face to another and from a corner location to one along the flats of the core without any deleterious effects, and may even be shuffled inboard with small impact on peaking. Second, shuffling the symmetric blanket assembly from one core face to another allows the uranium to be burned more evenly, allowing the blanket assembly to be resident in the core for more cycles. Third, placing the fuel rods containing natural uranium in the water-rich center of the symmetric assembly allows the natural uranium to achieve higher burnup rates. Also, plutonium conversion is likely to be improved. Finally, conventional designs with natural uranium along the core baffle require two separate fuel assembly designs, namely, one with natural uranium along one face, and another with natural uranium along two adjacent faces. Thus, these designs must be manufactured with four different configurations of natural uranium, including 90, 180 and 270 degree rotations of the basic design. In contrast thereto, the symmetric blanket assembly according to the invention requires only a single design, with no variations.

A preferred embodiment of the invention will now be described, by way of example only, with reference to the accompanying drawings, in which:

Fig. 1 is an elevational view, partly in section, of a nuclear fuel assembly embodying the invention, illustrated in vertically foreshortened form and with parts thereof broken away for clarity;

Fig. 2 is an enlarged cross-sectional diagram of the fuel assembly of Fig. 1, showing the patterns of fertile fuel rods, fissile fuel rods and guide thimbles composing the blanket fuel assembly and the symmetrical relationship therebetween; and

Fig. 3 is a cross-sectional diagram of a nuclear reactor core in which the symmetric blanket fuel assembly according to the invention is utilized, showing an example of the possible positions of the assembly in successive cycles of the core.

In the following description, like reference characters designate like or corresponding parts throughout the several views of the drawings, and terms such as "forward", "rearward", "left", "right", "upwardly", "downwardly", and the like, are employed as words of convenience not to be construed as limiting terms.

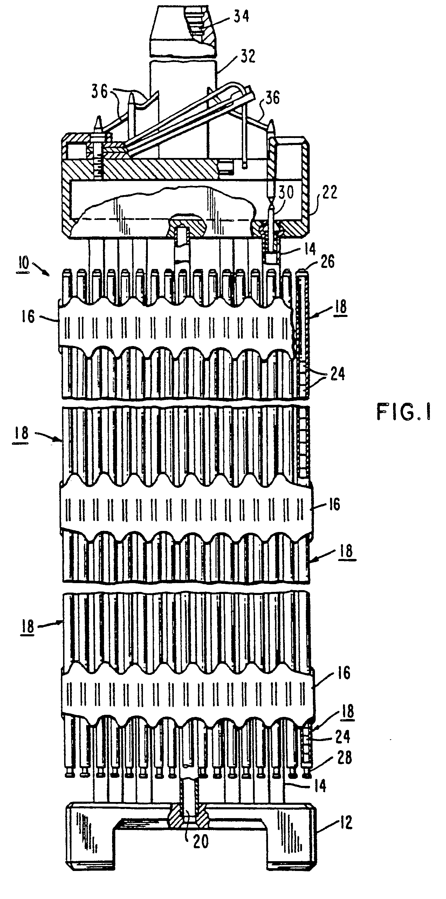

Referring now to the drawings, and particularly to Fig. 1, the fuel assembly illustrated therein and generally designated with reference numeral 10 is of the type used in pressurized water reactors, (PWR). Basically, it comprises a lower end structure or bottom nozzle 12 for supporting the assembly on the lower core plate (not shown) of a reactor; a plurality of guide tubes or thimbles 14 extending longitudinally upward from the bottom nozzle 12; a plurality of transverse grids 16 axially spaced along the guide thimbles 14; an organized array of elongate fuel rods 18 transversely spaced and supported by the grids 16; an instrumentation tube 20 located in the center of the assembly 10; and an upper end structure or top nozzle 22 attached to the upper ends of the guide thimbles 14. With its parts thus arranged, the fuel assembly 10 forms an integral unit capable of being conveniently handled without damaging the assembly.

As mentioned above, the fuel rods 18 in the assembly 10 are held in spaced relationship with one another by the grids 16 spaced apart along the fuel assembly length. Each fuel rod 18 contains nuclear fuel pellets 24 and has its opposite ends closed by means of end plugs 26, 28.

In the fuel assembly embodying the invention, some of the fuel rods 18 contain fuel pellets 24 of fertile material, while others contain fuel pellets 24 of fissile material, this being the only difference between the fuel rods 18. The fissile material is responsible for creating reactive power and for causing conversion of the fertile material into fissile material as operation of the reactor proceeds. A liquid moderator/coolant, such as water, or water containing boron, is pumped upwardly through the fuel assemblies of the core in order to extract heat generated therein for the production of useful work.

The fissioning process is controlled by means of control rods 30 which are reciprocally movable in the guide thimbles 14 located at predetermined positions in the fuel assembly 10. The top nozzle 22 includes a rod cluster control mechanism 32 having an internally threaded cylinder member 34 with a plurality of radially extending flukes or arms 36. Each arm 36 is interconnected to a control rod 30 such that the control mechanism 32 is operable to move the control rods 30 vertically in the guide thimbles 14 so as to control the fissioning process in the fuel assembly 10, as well known in the art.

As mentioned hereinbefore, the fuel assembly 10 contains both natural uranium and enriched uranium materials. These materials are provided separately, in stacked pellet form, in individual ones of the fuel rods 18. Furthermore, the respective fuel rods 18 containing the different materials are arrayed together in a predetermined relationship which enhances the fissioning process and thereby the burnup rates of the nuclear fuel material.

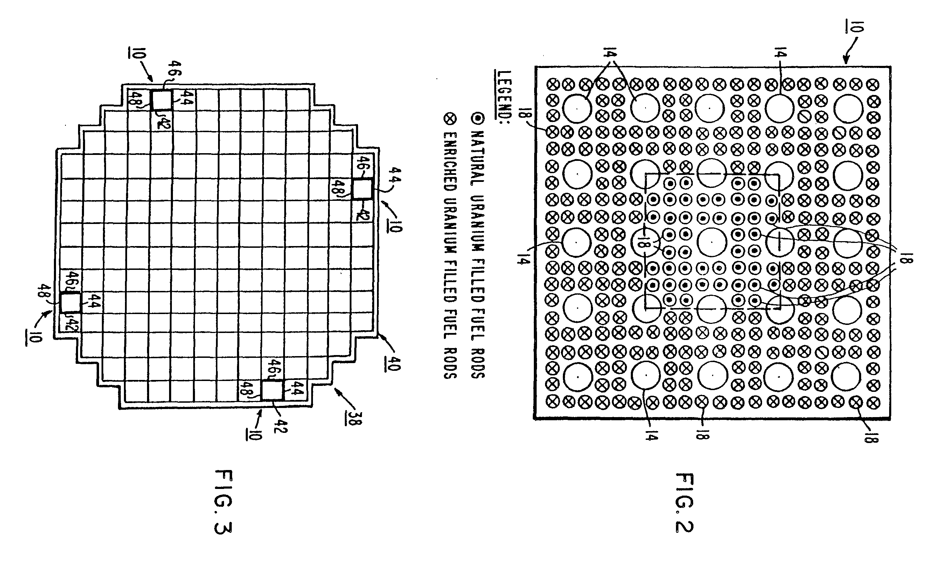

In Fig. 2, those of the fuel rods 18 which contain fertile material, i.e. natural uranium, and form a first group are marked with a central dot "." while those of the fuel rods 18 which contain fissile material, i.e. enriched uranium, and form a second group are marked with an "x". As readily apparent from Fig. 2, the first group of spaced-apart natural-uranium filled fuel rods is surrounded by the second group of spaced-apart enriched-uranium filled fuel rods in a predetermined symmetrical relationship.

In the preferred form of the symmetrical relationship, the first and second groups of fuel rods 18 form an overall square array of fuel rods. In the overall array, fuel rods in the first group form an inner, centrally located, generally square pattern having four sides, as represented by the connected broken lines in Fig. 2, whereas fuel rods in the second group form an outer, peripherally located, generally square pattern which surrounds the first group on all four sides thereof. The fuel rods 18 of each group are aligned with one another in columns and rows.

Guide thimbles 14 are interspersed in spaced-apart relationship among the fuel rods 18 of both the first and second groups. Preferably, the guide thimbles 14 likewise are arrayed in a generally square pattern in which the thimbles are aligned in columns and rows.

Because of the symmetrical relationship of the first and second groups of fuel rods 18, the assembly 10 need not remain in one location while resident in the core. As depicted in Fig. 3, at each cycle of operation of the reactor core 38, a given one of the fuel assemblies 10 can be shuffled about the core baffle 40 such that a different one of the four sides 42, 44, 46, 48 of the assembly 10 is facing toward the core baffle 40 at each position. By shuffling from one core face to the other from cycle to cycle, the uranium burns more evenly, improving fuel utilization. Also, the placement of the natural-uranium filled fuel rods in the water-rich assembly center allows greatly increased burnup and possibly improved plutonium production from the fertile material.

## Claims

1. A blanket fuel assembly for use in a nuclear reactor core, including a plurality of spaced-apart fuel rods, comprising a first group of said fuel rods (18) containing fertile material, and a second group of said fuel rods (18) containing fissile material, characterized in that the fuel rods of said second group surround the fuel rods in said first group, said first and second groups of fuel rods together forming a square array, said first group of fuel rods forming an inner, centrally located, generally square pattern, in which are present only fuel rods of said first group containing only fertile material, and said second group of fuel rods forming an outer, peripherally located, generally square pattern which surrounds the inner pattern and in which are present only fuel rods of said second group containing only fissile material.

2. A blanket fuel assembly according to claim 1, characterized in that the fuel rods of each group are aligned with one another in columns and rows.

3. A blanket fuel assembly according to claim 1 or 2 including a plurality of guide thimbles, characterized in that said guide thimbles (14) are interspersed in spaced-apart relationship among the fuel rods (18) of both said first and second groups.

4. A blanket fuel assembly according to claim 3, characterized in that said guide thimbles (14) are arrayed in a generally square pattern of aligned columns are rows of said thimbles.

5. A blanket fuel assembly according to any of claims 1 to 4, characterized in that said fertile material is natural uranium, and said fissile material is enriched uranium.

**Patentansprüche**

1. Brutmantel-Brennelement zum Einsatz in einem Reaktorkern, mit einer Mehrzahl von mit gegenseitigen Abständen verlaufenden Brennstäben, die eine erste Gruppe von Brennstäben (18), die brütbares Material enthalten, und eine zweite Gruppe von Brennstäben (18) aufweisen, die spaltbares Material enthalten, dadurch gekennzeichnet, daß die Brennstäbe der zweiten Gruppe die Brennstäbe der ersten Gruppe umschließen, die erste und zweite Brennstabgruppe zusammen eine quadratische Anordnung bildet, die erste Brennstabgruppe eine innere, zentrierte, etwa quadratische Anordnung bildet, in welcher nur Brennstäbe der ersten Gruppe vorhanden sind, die nur brütbares Material enthalten, und die zweite Brennstabgruppe eine äußere, peripher angeordnete, etwa quadratische Anordnung bilden, welche die innere Anordnung umschließt und in welcher nur Brennstäbe der zweiten Gruppe vorhanden sind, die nur spaltbares Material enthalten.

2. Brutmantel-Brennelement nach Anspruch 1, dadurch gekennzeichnet, daß die Brennstäbe jeder Gruppe mit Bezug zueinander in Reihen und Spalten ausgerichtet angeordnet sind.

3. Brutmantel-Brennelement nach Anspruch 1 oder 2, mit einer Mehrzahl von Führungsrohren, dadurch gekennzeichnet, daß die Führungsrohre (14) mit gegenseitigen Abständen unter den Brennstäben (18) sowohl der ersten als auch der zweiten Gruppe verteilt sind.

4. Brutmantel-Brennelement nach Anspruch 3, dadurch gekennzeichnet, daß die Führungsrohre (14) in etwa quadratischem Muster in Reihen und Spalten ausgerichtet angeordnet sind.

5. Brutmantel-Brennelement nach einem der Ansprüche 1 bis 4, dadurch gekennzeichnet, daß das brütbare Material natürliches Uran und das spaltbare Material angereichertes Uran ist.

**Revendications**

1. Assemblage combustible à zone fertile destiné à être utilisé dans un coeur de réacteur nucléaire, comprenant une pluralité de barres de combustible espacées les unes des autres, comportant un premier groupe de ces barres (18) de combustible contenant un matériau fertile et un second groupe de ces barres (18) de combustible contenant un matériau fissile, caractérisé en ce que les barres de combustible du second groupe entourent les barres de combustible du premier groupe, les premier et second groupes de barres de combustible formant ensemble un réseau carré, le premier groupe de barres de combustible formant un arrangement intérieur, carré d'une façon générale, placé centralement et dans lequel ne sont présentes que les barres de combustible du premier groupe contenant uniquement un matériau fertile, et le second groupe de barres de combustible formant un arrangement extérieur, carré d'une façon générale, placé périphériquement, entourant l'arrangement et dans lequel ne sont présentes que les barres de combustible du second groupe contenant uniquement un matériau fissile.

2. Assemblage combustible à zone fertile selon la revendication 1, caractérisé en ce que les barres de combustible de chaque groupe sont alignées les unes avec les autres en colonnes et en rangées.

3. Assemblage combustible à zone fertile selon la revendication 1 ou 2, comprenant une pluralité de tubes-guides, caractérisé en ce que les tubes-guides (14) sont intercalés, en étant espacés les uns des autres, parmi les barres (18) de combustible des premier et second groupes à la fois.

4. Assemblage combustible à zone fertile selon la revendication 3, caractérisé en ce que les tubes-guides (14) sont disposés selon un arrangement, carré d'une façon générale, de colonnes et de rangées de ces tubes-guides.

5. Assemblage combustible à zone fertile selon l'une quelconque des revendications 1 à 4, caractérisé en ce que le matériau fertile est de l'uranium naturel et le matériau fissile est de l'uranium enrichi.

EP 0 180 775 B1

FIG.1

FIG. 2

LEGEND:

⊙ NATURAL URANIUM FILLED FUEL RODS

⊗ ENRICHED URANIUM FILLED FUEL RODS

FIG. 3

2